# EUROPEAN PATENT APPLICATION

(11) **EP 2 860 398 A1**
(43) Date of publication of application: **15.04.2015**
(21) Application number: 13190933.5
(22) Date of filing: 30.10.2013
(51) Int. Cl.: F04B 35/04, B29C 73/16, F04B 35/06, F04B 39/12, F04B 39/14

(54) **Cylinder seat of an air compressor of a tire repair machine**

(30) Priority: 27.08.2013 TW 102130657
(71) Applicant: Active Tools International (HK) Ltd., Causeway Bay Hong Kong (CN)
(72) Inventor: Hong, David, Causeway Bay (CN)
(74) Representative: Walker, Ross Thomson

(57) **Abstract**

A cylinder seat of an air compressor of a tire repair machine, comprising a seat board, a cylinder, and a motor seat is provided; the seat board includes a first surface and a second surface that is opposite to the first surface; the cylinder is integrated with the seat board and is disposed on the first surface of the seat board; an opening configured to accommodate a plunger is defined in one end of the cylinder, and a one-way valve device is mounted on another opposite end of the cylinder; and the motor seat is integrated with the seat board and is disposed on the second surface of the seat board. Thus, the overall structure of the cylinder seat is simple, and the manufacturing cost can be decreased.

## Description

This application claims the priority of a Taiwanese invention application No. 102130657 filed on August 27, 2013, the entire content of which is hereby incorporated by reference.

### FIELD OF THE INVENTION

The present application relates to an improved structure of a cylinder seat of an air compressor used in a portable tire repair machine.

### BACKGROUND OF THE INVENTION

When a tire of a vehicle is broken, the vehicle cannot run due to loss of tire pressure. Until the broken tire is replaced by a new one, or is repaired and aerated, the vehicle can run again. Therefore, vehicles are generally equipped with spare tires for coping with contingencies. However, the weight of a spare tire with a rim will increase the total weight of a vehicle and consume more fuel, which is wasteful and may adversely affect environmental protection. In order to decrease the weight of a spare tire attached on a vehicle, some manufacturers produce relatively lighter tire repair machines equipped in vehicles. Once a tire is broken and leaks, such a tire repair machine can be taken out for emergency repair and inflation.

A well-known tire repair machine can also be used as a tire inflator. The tire repair machine generally includes a case, a glue bucket, and an air compressor, and both the glue bucket and the air compressor are received inside the case. The glue bucket is connected with a glue pipe, and the air compressor is connected with an air pipe. One end of the glue pipe is provided with a glue nozzle, and one end of the air pipe is provided with an air nozzle. When the tire repair machine is used as a tire inflator, a user can connect the air nozzle to an air tap of a tire directly, and then turn on the air compressor to inject compressed air into the tire. When the tire repair machine performs a repairing function, the glue nozzle needs to be connected to an air tap of a tire, and then a pump is turned on to inject glue accommodated in the glue bucket into the tire. Afterwards, the glue nozzle is removed, the air nozzle is connected to the air tap of the tire, and compressed air is injected into the tire to generate a proper tire pressure. Thus, the air nozzle is removed, and a vehicle using the tire is driven to run a distance slowly, so that the glue flows uniformly on an inner surface of the tire and is filled in broken portions. After the glue is solidified, air leakage of the tire can be arrested, and the vehicle can be driven to reach the nearest repair station for further inspection.

The aforementioned air compressor disposed in the tire repair machine should be provided with a cylinder seat, and a cylinder, a motor and a transmission device are fixed on the cylinder seat. Wherein , the cylinder seat can be made of plastic, metal or other materials, but the cylinder should be made of metal. A plunger is assembled in the cylinder, and the plunger is connected to the transmission device via a connecting rod. Besides, the transmission device is connected to the motor. Thus, when the motor is working, the motor drives the transmission device to work, and the transmission device drives the plunger to reciprocate in the cylinder via the connecting rod. In this way, compressed air is generated in the cylinder, and the compressed air is led to a one-way valve device to be output, so that the compressed air can be used for aerating the tire or injecting the glue to the tire.

However, in the aforementioned well-known tire repair machine, the transmission device and the motor are unable to be mounted on the cylinder seat unless the cylinder and a motor seat have been fixed on the cylinder seat. Therefore, the structure of the cylinder seat of the well-known tire repair machine is complicated to assemble, and consumes much manufacturing cost.

### SUMMARY OF THE INVENTION

The objective of the present application is to solve this problem: in a well-known tire repair machine, a transmission device and a motor are unable to be mounted on a cylinder seat of an air compressor of the tire repair machine unless a cylinder and a motor seat have been fixed on the cylinder seat, and thus the cylinder seat is complicated to assemble and consumes much manufacturing cost.

In one embodiment of the present application, a cylinder seat of an air compressor of a tire repair machine is provided. The cylinder seat comprises a seat board, a cylinder, and a motor seat, which are integrally made of engineering plastic material. The cylinder is mounted on a first surface of the seat board, and the motor seat is mounted on a second surface of the seat board, so that a plunger can be mounted on the cylinder directly, and a motor can be mounted on the motor seat directly. A connecting device can be mounted on the seat board directly and connect the motor with the cylinder, so that the manufacture cost is reduced.

In another embodiment of the present application, the cylinder seat includes the seat board, the cylinder, and the motor seat, which are integrally made of engineering plastic material having enough strength and heat-resistant properties by an integrated molding technology. The seat board includes the first surface and the second surface that is opposite to the first surface. The cylinder is integrated with the seat board and is disposed on the first surface of the seat board, so that an opening configured to accommodate the plunger is defined in one end of the cylinder, and a one-way valve device is mounted on another opposite end of the cylinder. The motor seat is integrated with the seat board and is disposed on the second surface of the seat board, and is configured for holding the motor.

In the present application, by adopting the aforementioned integrated structure, in the assembly process of the cylinder seat, the cylinder and the motor seat don't need to be mounted on the seat board. Thus, the overall structure of the cylinder seat is simple, and the manufacturing cost can be reduced.

### BRIEF DESCRIPTION OF THE DRAWINGS

The present application will be further described with reference to the accompanying drawings and embodiments in the following, in the accompanying drawings:
Fig. 1 is a perspective view of a cylinder seat in accordance with an embodiment of the present application;
Fig. 2 is an exploded view showing an assembly relation between the cylinder seat and other elements of the present application;
Fig. 3 is a perspective view of the other elements assembled on the cylinder seat, in accordance with an embodiment of the present application;
Fig. 4 is a plan view of the other elements assembled on the cylinder seat, in accordance with an embodiment of the present application;
Fig. 5 is a cut-away view of the cylinder seat along the A-A direction shown in Fig. 4;
Fig. 6 is a cut-away view of the cylinder seat along the B-B direction shown in Fig. 4.

### BRIEF DESCRIPTION OF THE SYMBOLS

1-seat board; 11-cylinder; 110-opening; 12-motor seat; 13-central hole; 2-one-way valve device; 21-air inlet; 22-first air outlet; 23-second air outlet; 24-valve plate; 25-spring; 3-pressure gage; 4-motor; 41-driving gear; 5-transmission device; 51-follower gear; 52-flywheel; 53-plunger; 531-connecting rod;54-first bearing; 55-second bearing ; 56-first axle; 57-second axle.

### DETAILED DESCRIPTION OF THE PREFERRED EMBODIMENT

To make the technical feature, objective and effect of the present application be understood more clearly, now the specific implementation of the present application is described in detail with reference to the accompanying drawings and embodiments.

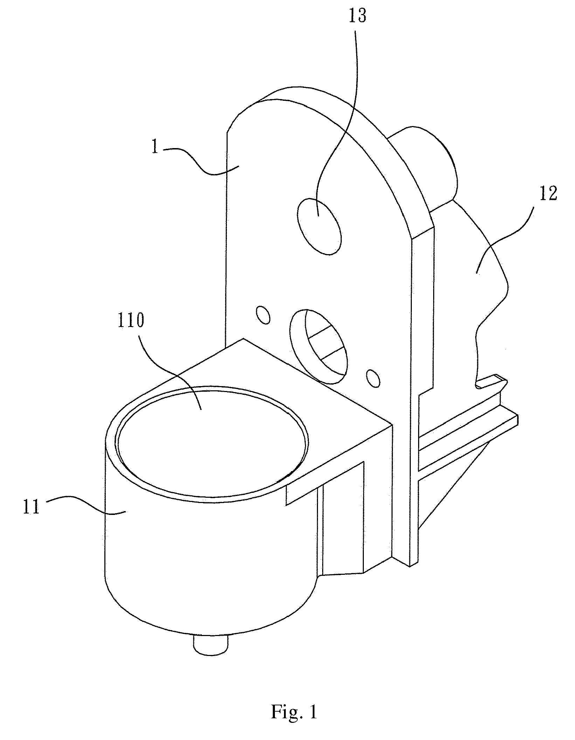

As shown in Fig. 1, the present application provides a cylinder seat of an air compressor of a tire repair machine, and the cylinder seat is made of engineering plastic material having enough strength and heat-resistant properties by an integrated molding technology. The cylinder seat comprises a seat board 1, a cylinder 11, and a motor seat 12. The seat board 1 includes a first surface and a second surface that is opposite to the first surface. A central hole 13 is defined in the seat board 1 and runs through the first surface and the second surface. The cylinder 11 is integrated with the seat board 1 and is disposed on the first surface of the seat board 1, so that an opening 110 configured to accommodate a plunger 53 is defined in one end of the cylinder 11. A one-way valve device 2 is mounted on another opposite end of the cylinder 11. The motor seat 12 is integrated with the seat board 1 and is disposed on the second surface of the seat board 1, and is configured for holding a motor 4.

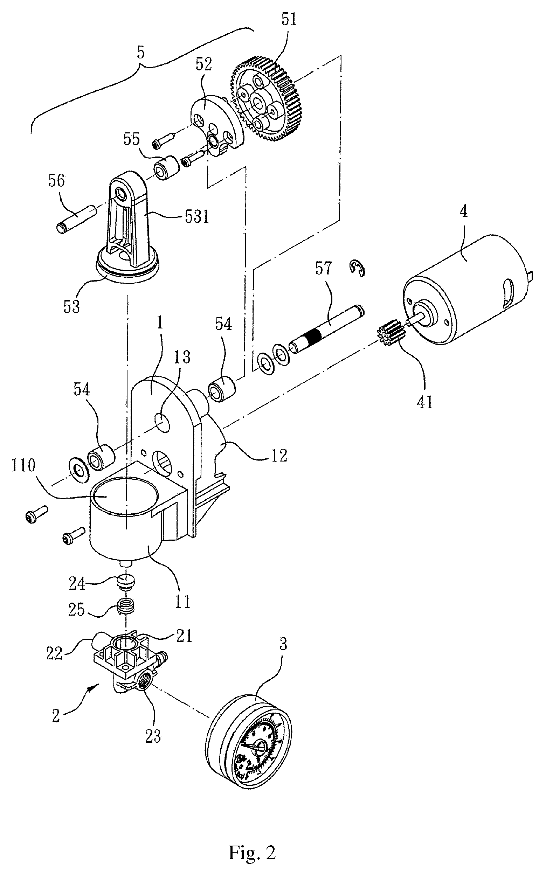

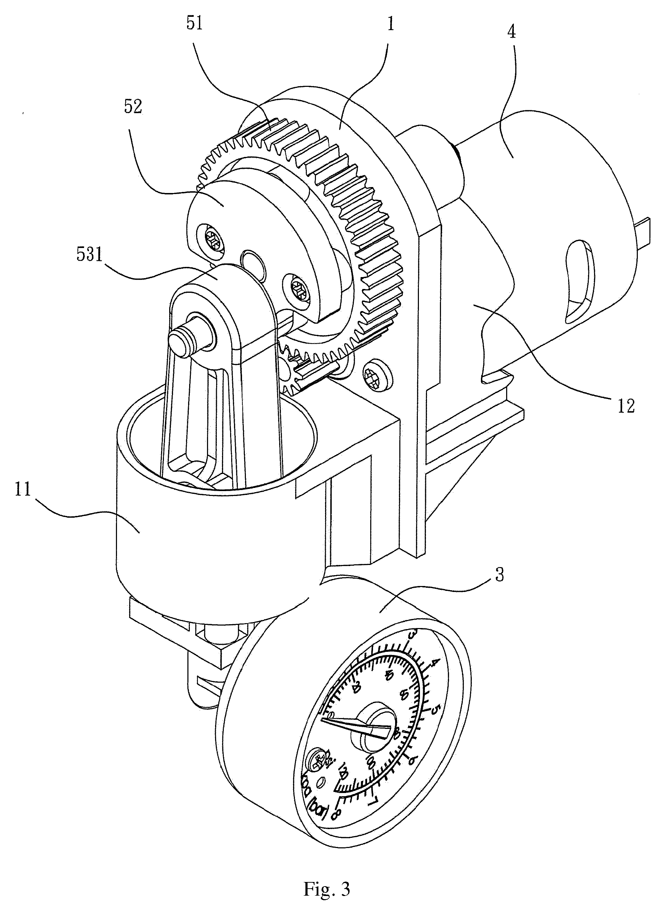

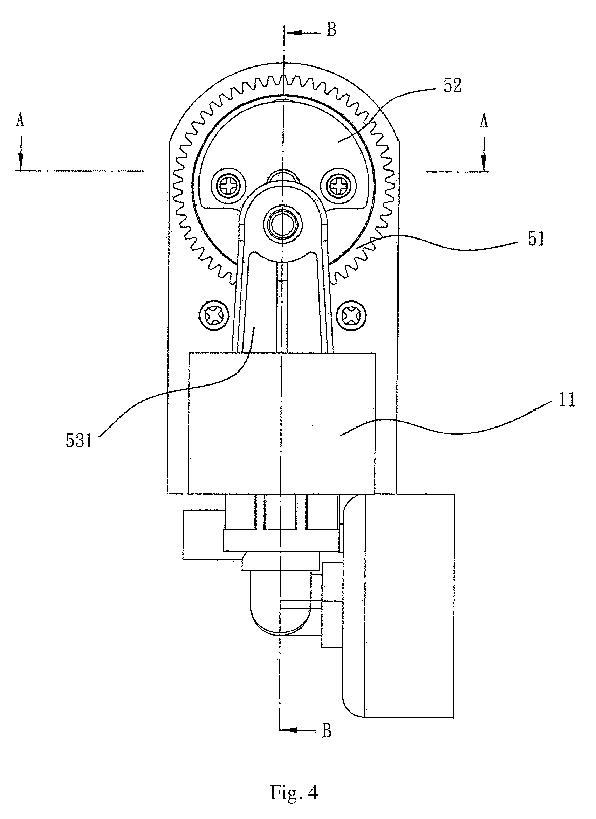

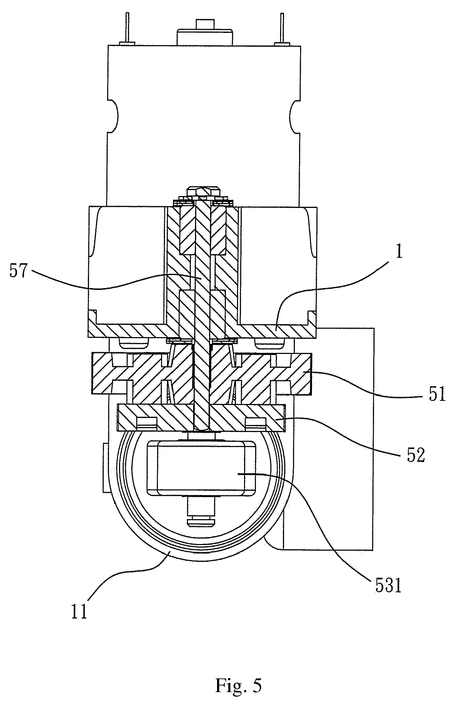

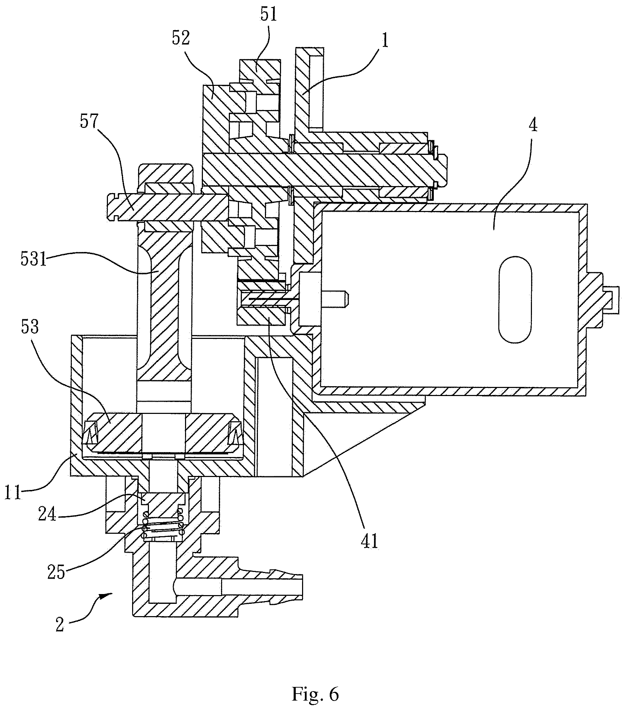

As shown in Fig. 2, the aforementioned cylinder seat acts as a seat body configured for holding the motor 4 and a transmission device 5. The assembly method of the cylinder seat is provided as follows: the motor 4 is assembled on the motor seat 12 directly; a drive shaft of the motor 4 runs through the seat board 1, and a driving gear 41 is sheathed on the drive shaft. Two first bearings 54 are mounted in the central hole 13 of the seat board 1 (understandably, in other embodiments, the number of the first bearing 54 can be one). The transmission device 5 includes a follower gear 51, a flywheel 52, a connecting rod 531, and the plunger 53. The plunger 53 is connected to one end of the connecting rod 531, and the flywheel 52 is fixedly assembled on the follower gear 51. The other end of the connecting rod 531 is movably connected to the flywheel 52 via a second bearing 55 and a first axle 56, so that the end of the connecting rod 531 movably connected to the flywheel 52 is placed eccentrically against the follower gear 51. The follower gear 51 is movably assembled on the seat board 1 via a second axle 57 and the first bearings 54, so that the follower gear 51 engages with the driving gear 41. The plunger 53 is assembled in the cylinder 11 via the opening 110. The assembly state and structure of the cylinder seat are shown in Figs 3 to 6.

As shown in Figs 2 to 6, the aforementioned one-way valve device 2 includes a valve body, a top wall of the valve body defines an air inlet 21, and two opposite side walls of the valve body define a first air outlet 22 and a second air outlet 23 respectively. A spring 25 and a valve plate 24 are received in the air inlet 21. The air inlet 21 is connected to a bottom outlet of the cylinder 11, so that the valve plate 24 and the spring 25 can achieve a non-return one-way ventilation effect in the air inlet 21. The first air outlet 22 can be connected to an air pipe (not shown), and configured for aerating or injecting air into a glue bucket. The second air outlet 23 is configured for accommodating a pressure gage 3. Therefore, when the motor 4 is working and drives the driving gear 41 to rotate, the follower gear 51 and the flywheel 52 are driven to rotate at the same time, and the flywheel 52 drives the plunger 53 to reciprocate in the cylinder 11 via the connecting rod 531. Thus, compressed air is generated in the cylinder 11 and led to the valve body via the air inlet 21 of the one-way valve device 2, and then flows out from the first air outlet 22 and the second air outlet 23. In this way, a tire can be aerated by the compressed air. Furthermore, when the compressed air is injected into a glue bucket, glue in the glue bucket can be driven to flow into the tire and repair the tire. Users can know the pressure value of the compressed air using the pressure gage 3.

While the embodiments of the present application are described with reference to the accompanying drawings above, the present application is not limited to the above-mentioned specific implementations. In fact, the above-mentioned specific implementations are intended to be exemplary not to be limiting. In the inspiration of the present application, those ordinary skills in the art can also make many modifications without breaking away from the subject of the present application and the protection scope of the claims. All these modifications belong to the protection of the present application.

## Claims

1. A cylinder seat of an air compressor of a tire repair machine, comprising a seat board, a cylinder, and a motor seat;
wherein, the seat board includes a first surface and a second surface that is opposite to the first surface;
wherein, the cylinder is integrated with the seat board and is disposed on the first surface of the seat board; an opening configured to accommodate a plunger is defined in one end of the cylinder, and a one-way valve device is mounted on another opposite end of the cylinder; and
wherein, the motor seat is integrated with the seat board and is disposed on the second surface of the seat board.

2. The cylinder seat of the air compressor of the tire repair machine according to claim 1, wherein, the seat board, the cylinder, and the motor seat are integrally formed by engineering plastic material.
